# FASCICULE DE BREVET EUROPEEN

(11) **EP 1 242 332 B1**
(45) Date de publication et mention de la délivrance du brevet: **12.03.2008**
(21) Numéro de dépôt: 00988860.3
(22) Date de dépôt: 21.11.2000
(51) Int. Cl.: C04B 35/532, C25C 3/12

(54) **PROCEDE DE FABRICATION DE BLOCS CARBONES A HAUTE RESISTANCE AUX CHOCS THERMIQUES**
VERFAHREN ZUR HERSTELLUNG EINES RUSSBLOCKES MIT HOHER RESISTENZ GEGENÜBER THERMISCHEN SCHOCKS
METHOD FOR MAKING CARBON BLOCKS HIGHLY RESISTANT TO THERMAL SHOCK

(30) Priorité: 24.11.1999 FR 9914800
(43) Date de publication de la demande: 25.09.2002
(73) Titulaire: ALUMINIUM PECHINEY, 75218 Paris Cedex 16 (FR); FCB Aluminium, 69700 Givors (FR)
(72) Inventeur: DREYER, Christian, F-73300 St. Jean de Maurienne (FR); SAMANOS, Bernard, F-73300 St. Jean de Maurienne (FR)
(74) Mandataire: Marsolais, Richard
(86) Numéro de dépôt international: PCT/FR2000/003226
(87) Numéro de publication internationale: WO 2001/038253

(56) Documents cités:
- DE-A- 3 540 169
- FR-A- 2 740 771
- US-A- 5 299 745

## Description

### Domaine de l'invention

L'invention concerne un procédé de fabrication de blocs carbonés à haute résistance au choc thermique, et notamment d'anodes destinées à la production d'aluminium par électrolyse ignée d'alumine dissoute dans un bain de cryolithe fondue, selon le procédé Hall-Héroult.

### Etat de la technique

Les produits carbonés sont généralement obtenus par des procédés industriels comprenant une opération de mélange d'un liant (tel que du brai) et de matières carbonées (telles que du coke), une opération de mise en forme à chaud du mélange et une opération de cuisson des produits crus. Le liant et les matières carbonées sont mélangés sous forme pulvérulente, c'est-à-dire à partir de matière broyée de granulométrie déterminée. En pratique, l'opération de mélange s'effectue à partir de plusieurs fractions granulométriques dites "industrielles" de matières carbonées stockées dans des silos distincts et de brai.

Dans bon nombre d'applications industrielles, et notamment en électrométallurgie, les produits carbonés cuits doivent présenter, outre leurs propriétés de conductions thermique et électrique, une grande résistance aux chocs thermiques.

En particulier, dans le cas de la production d'aluminium par électrolyse d'alumine en bain de cryolithe fondue, les anodes carbonées constituent un produit consommable que l'on remplace sur la cuve d'électrolyse au fur et à mesure de leur consommation par combustion. Typiquement, une usine d'électrolyse moderne produisant, par exemple, 240 000 tonnes d'aluminium par an consomme simultanément 150 000 anodes, dont le poids unitaire est de l'ordre d'une tonne.

Or, lors des opérations de remplacement des anodes usées par des anodes neuves précuites, ces dernières, qui sont généralement à une température proche de l'ambiante, sont introduites dans le bain d'électrolyte fondu, qui est maintenu à une température voisine de 950°C. Le choc thermique, dû à l'augmentation brutale de la température, peut provoquer une fissuration, voire une rupture, des anodes. En général, la dégradation de la qualité des anodes due au choc thermique se traduit par l'apparition et le développement de fissures, et conduit rapidement à une perte de production de métal ou à des instabilités de marche des cuves du fait de la chute dans le bain d'électrolyse de morceaux de carbone détachés des anodes fissurées.

Les coûts d'exploitation supplémentaires engendrés par le défaut de résistance au choc thermique augmentent rapidement avec le taux de rebut des anodes fissurées suite au choc thermique. Il est dès lors très important d'être assuré de la bonne résistance au choc thermique des anodes avant leur mise en service. Un taux de rebut inférieur à 1 % est considéré comme acceptable, mais devient rapidement intolérable lorsqu'il dépasse 2 %.

La demande de brevet FR 2 740 771 (équivalente aux demandes de brevet canadien CA 2 192 707 et australien AU 12415/97), au nom de la demanderesse, décrit un procédé de fabrication de blocs carbonés, et notamment d'anodes, à haute résistance au choc thermique. Ce procédé comprend successivement un réglage de la granulométrie d'un agrégat carboné, par broyage et classement granulométrique, un malaxage à une température généralement comprise entre 130°C et 180°C de l'agrégat broyé avec une quantité prédéterminée de liant à base de brai pour former une pâte homogène, une densification par compactage, une mise en forme de ladite pâte pour constituer le bloc carboné à l'état cru, et enfin une cuisson du bloc carboné à une température généralement supérieure à 900 °C. Le réglage de la granulométrie de l'agrégat est effectué selon trois fractions : ultra-fine (UF) pour les grains de diamètre inférieur à 30 µm, sable (S) pour les grains de diamètre compris entre 30 et 300 µm, et grain (Gr) pour les grains de diamètre supérieur à 300 µm. Le rapport pondéral des fractions Gr et S est ajusté de telle sorte que Gr/S est supérieur à 4. Ce procédé permet de réduire très significativement le taux de rebut des blocs carbonés par fissuration consécutive à un choc thermique.

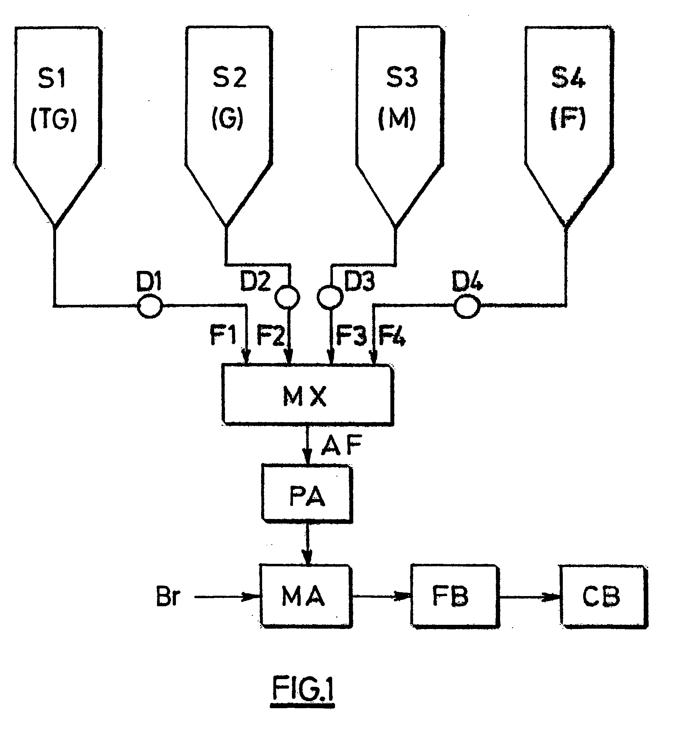

Tel que décrit dans la demande FR 2 740 771, les trois fractions sont obtenues en pratique par un mélange de plusieurs fractions granulométriques industrielles de matière sèche provenant de silos distincts (typiquement de 3 à 5 silos). Par exemple, tel qu'illustré à la figure 1, cette demande décrit l'utilisation de 4 fractions industrielles, à savoir :
- TG (très gros) formée de grains de recyclé de diamètre compris entre 1,5 mm et 15 mm et obtenue par broyage des déchets inhérents de fabrication comme les mégots d'anode usée ;
- G (gros) formée de grains de coke de diamètre compris entre 1,5 mm et 5 mm et constituée par la tranche granulométrique supérieure des grains de coke après tamisage à 1,5 mm ;
- M (moyens) formée de grains de coke et recyclés de diamètre compris entre 0 et 1,5 mm et constituée par les fractions granulométriques inférieures à 1,5 mm des grains de coke et de recyclé ;
- F (fines) formée de fines de diamètre inférieur à 0,2 mm et constituée par la fraction des moyennes M affinée par broyage. Cette fraction de fines doit comporter une proportion suffisante d'ultra-fines UF de diamètre inférieur à 0,03 mm.

Ces fractions granulométriques théorique et industrielle se recouvrent alors selon un diagramme connu. Ainsi, le grain Gr est apporté par TG, G et une partie de M ; le sable S et les ultra-fines UF sont apportés par une partie de M et de F. Des proportions précises de chaque fraction (F1, F2, F3 et F4) doivent être mélangées afin d'obtenir un agrégat carboné AF ayant la granulométrie finale souhaitée. Ces proportions sont ajustées à l'aide de doseurs (D1, D2, D3, D4) raccordés aux silos (SI, S2, S3, S4) contenant les différentes fractions granulométriques. Le mélange pulvérulent ainsi obtenu (AF) est ensuite généralement préchauffé (étape PA), puis malaxé avec un liant à base de brai (Br) dans un malaxeur (étape MA), mis en forme (étape FB) et cuit à haute température (étape CB).

Ce procédé, relativement complexe, requiert dès lors une gestion rigoureuse des stocks de matière première, des flux de matière sèche et des réserves des silos, et éventuellement l'introduction d'un broyage intermédiaire de matière provenant de certains silos.

La demanderesse a recherché un procédé de fabrication industriel de blocs carbonés de grande dimension (c'est-à-dire dont le volume est typiquement supérieur à 0,2 m³) ayant une grande résistance au choc thermique qui permette d'éviter les inconvénients de l'art antérieur. En particulier, elle a recherché des moyens pour réduire l'importance et les coûts des installations requises, pour simplifier le procédé de fabrication et les modes opératoires, la gestion des stocks et les flux de matière.

### Description de l'invention

Le procédé de fabrication de blocs carbonés, et notamment d'anodes, selon l'invention comprend l'approvisionnement d'un agrégat carboné initial AC, l'ajustement de la granulométrie dudit agrégat carboné AC de manière à obtenir un agrégat carboné final AF de granulométrie déterminée Gf, un malaxage à chaud MA de l'agrégat carboné final AF avec une quantité déterminée de liant à base de brai Br pour former une pâte homogène, une étape FB de formation d'au moins un bloc carboné cru à partir de ladite pâte, et une étape CB de cuisson du ou des blocs carbonés crus, et est caractérisé en ce que ledit ajustement comprend :
a- la séparation de l'agrégat carboné initial AC en une première fraction F1, de granulométrie G-, constituée de grains dont la taille est inférieure à X et en une seconde fraction F2, de granulométrie G+, constituée de grains dont la taille est supérieure ou égale à X, X étant compris entre 0,2 et 2 mm, et de préférence compris entre 0,3 et 1 mm, ledit agrégat carboné AC comprenant de préférence du coke de pétrole calciné dont le taux de particules de taille inférieure à 0,3 mm est au plus égal à 35 % ;
b- le broyage B1 de la première fraction F1 et d'une partie P1 de la seconde fraction F2, dite "partie dérivée P1", de manière à obtenir une poudre F comprenant une proportion PUF contrôlée de grains ultra-fins, dits UF, c'est-à-dire de grains de taille inférieure à 30 µm ;
c- le mélange MX de la partie restante P2 de la fraction F2 et de la dite poudre F dans des proportions qui permettent d'obtenir des blocs carbonés dont la granulométrie Gf à l'état cru est telle que le rapport dit "Gr/S" entre la proportion PGr de grains de taille supérieure à 0,3 mm et la proportion PS de grains de taille comprise entre 30 µm et 0,3 mm est au moins égal à 4, et dont la densité après cuisson est élevée, c'est-à-dire de préférence supérieure à 1,55, et de préférence encore supérieure à 1,6.

La présence de grains ultra-fins permet d'augmenter la densité des blocs carbonés. La proportion PUF de grains ultra-fins dans la poudre F est un paramètre du procédé selon l'invention qui est ajusté empiriquement de manière à atteindre la densité la plus élevée possible. La proportion PUF est généralement supérieure à 70 %, et de préférence supérieure à 80 %, et de préférence encore supérieure à 90 %.

La demanderesse a en effet réalisé que, de matière inattendue, il était possible d'obtenir un rapport PGr/PS (également appelé "Gr/S") apte à assurer une résistance suffisante au choc thermique sans avoir à recourir aux procédés compliqués enseignés par l'art antérieur. En particulier, selon l'invention, le mélange MX de produits carbonés s'effectue à partir de deux sources seulement de matière carbonée pulvérulente, à savoir P2 et F. Le procédé selon l'invention permet également d'ajuster de manière simple et simultanée le rapport Gr/S et la densité des anodes.

Les agrégats carbonés AC qui servent de matière première au procédé selon l'invention, et qui sont de préférence des agrégats tout venant, peuvent avoir des proportions importantes de grains de taille inférieure à 0,3 mm. En effet, les opérations de séparation de l'agrégat carboné initial AC en deux fractions et de broyage de la première fraction permet d'augmenter le rapport Gr/S de manière significative même en partant d'un coke dont le taux de grains de taille inférieure à 0,3 mm est aussi élevé que 35 %. Toutefois, afin d'obtenir un rapport Gr/S supérieur à 4, il est préférable d'utiliser des agrégats carbonés dont la proportion de grains de taille inférieure à 0,3 mm est inférieure à 15 %, voire inférieure à 10 %.

L'agrégat carboné initial AC peut être constitué d'agrégats carbonés provenant de plusieurs sources. En particulier, l'agrégat carboné initial AC peut contenir une proportion déterminée de produits carbonés recyclés R. Par exemple, dans l'industrie de la production d'aluminium, il est avantageux, pour des raisons économiques et techniques, d'ajouter une proportion allant jusqu'à 40 % de produits carbonés recyclés provenant notamment des anodes usées ou rebutées avant ou après cuisson. Ces produits présentent également l'avantage de contenir, en général, une proportion importante de très gros ou de gros grains par rapport aux grains sable ou fins. Ainsi, l'agrégat carboné initial AC peut être typiquement constitué d'un mélange de coke de pétrole calciné tout venant C et d'une partie minoritaire de produits carbonés recyclés R.

L'invention sera mieux comprise à partir des figures et de la description détaillée qui suit.

La figure 1 illustre une partie d'un procédé de fabrication de blocs carbonés, selon l'art antérieur, dans lequel la matière sèche initiale est ensilée dans des silos distincts selon sa granulométrie et sa composition.

La figure 2 illustre le procédé selon l'invention. Les figures 3 à 6 illustrent des modes de réalisation préférés du procédé selon l'invention.

### Description détaillée de l'invention

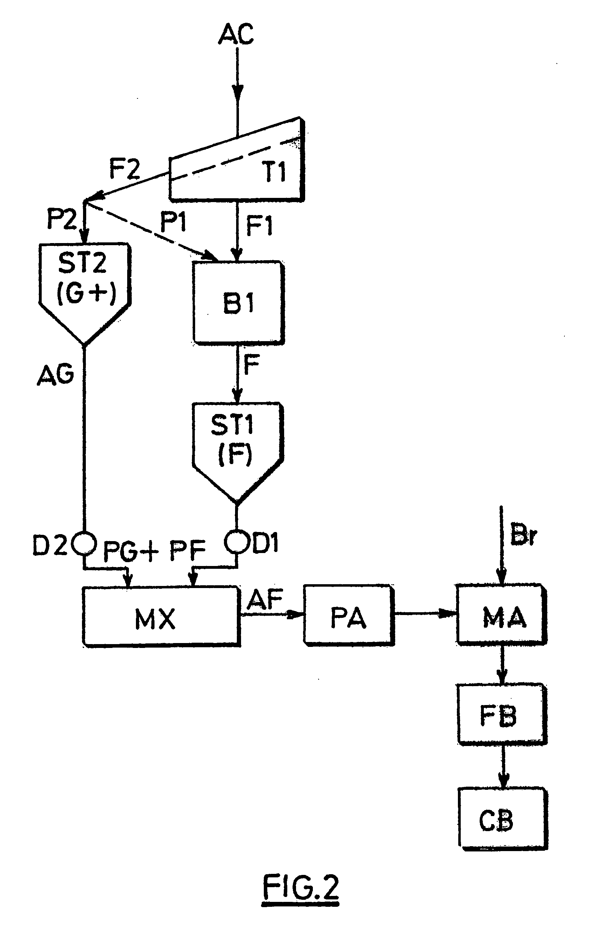

Dans le procédé selon l'invention, tel qu'illustré à la figure 2, l'agrégat carboné initial AC est séparé, à l'aide d'au moins un moyen de séparation T1, en une première fraction F1 de granulométrie G- et en une seconde fraction F2 de granulométrie G+.

Le moyen de séparation est typiquement un tamis ou un séparateur dynamique ventilé.

Ladite partie dérivée P1 est ajustée en fonction de la granulométrie de l'agrégat carboné initial AC. De préférence, elle est telle qu'on ne broie qu'une faible part de F2, c'est-à-dire qu'une faible partie P1 de F2 est dérivée pour être broyée avec F1. P1 est de préférence inférieure à 20 %, et typiquement comprise entre 1 % et 10 %.

La fraction F1 et la partie dérivée P1 de la fraction F2 sont ensuite broyées dans au moins un moyen de broyage B1 de manière à obtenir une poudre F comprenant une proportion PUF contrôlée de grains ultra-fins, c'est-à-dire de grains de taille inférieure à 30 µm. Afin d'obtenir un débit DF donné de poudre F, quelle que soit la granulométrie de l'agrégat initial AC, la partie dérivée P1 peut être régulée de façon à ce que le débit DF de poudre F sortant du broyeur B 1 soit sensiblement constant. Le débit DF est égal à DF2 x P1 + DF1, où DF2 et DF1 sont les débits respectifs des fractions F1 et F2. En pratique, les parties P1 et P2 peuvent être régulées de manière à maintenir sensiblement constante le débit DF. Cette régulation peut être effectuée à partir des niveaux de remplissage de silos tampon ST1 et ST2.

B1 est typiquement un broyeur à boulets, muni éventuellement d'un circuit de re-circulation comprenant un sélecteur dynamique ventilé permettant d'ajuster la granulométrie et la fraction PUF.

La partie restante P2 de la fraction F2 (appelée aussi "agrégat grossier" AG) et la poudre F sont ensuite dosées et combinées pour reconstituer un agrégat carboné AF (étape MX). Ladite partie restante et ladite poudre F sont mélangées dans des proportions respectives PG+ et PF qui permettent d'obtenir des blocs carbonés crus dont la granulométrie Gf est telle que le rapport entre la proportion PGr de grains de taille supérieure à 0,3 mm et la proportion PS de grains de taille comprise entre 30 µm et 0,3 mm est au moins égal à 4 et des blocs carbonés cuits de haute densité, c'est-à-dire de densité de préférence supérieure à 1,55, et de préférence encore supérieure à 1,60. Le rapport Gr/S est au moins égal à 4, et de préférence supérieur à 10, et de préférence encore supérieur à 15.

Afin de faciliter le mélange de l'agrégat final avec le liant, l'agrégat final est généralement préchauffé (étape PA). En pratique, il est avantageux d'effectuer le mélange MX et le préchauffage PA dans un même dispositif, qui peut être typiquement une vis de préchauffage à fluide thermique. Le dosage des agrégats intermédiaires AG et F peut être effectué à l'aide de doseurs D1 et D2 installés typiquement à l'entrée du dispositif. Ces doseurs, qui sont typiquement des dosimètres à vis ou à bande, permettent de régler le débit des agrégats intermédiaires et, par conséquent, les proportions PG+ et PF de ces agrégats. La proportion PF détermine la proportion de grains ultrafins PUF, laquelle conditionne, en grande partie, la densité des blocs carbonés cuits.

L'agrégat final est mélangé à un liant à base de brai (Br) et malaxé à chaud pour former une pâte homogène (étape MA). Typiquement, cette étape est réalisée dans un malaxeur, tel qu'un malaxeur de type Buss® ou Eirich®. La température de malaxage est de préférence comprise entre 130°C et 220°C, et typiquement entre 170°C et 190°C. Le malaxage est suivi d'une étape FB de mise en forme de ladite pâte pour constituer un ou des blocs carbonés à l'état cru. Cette mise en forme peut être réalisée dans une vibrotasseuse ou une presse. Cette dernière étape comprend avantageusement une opération de densification par compactage de ladite pâte. Les blocs carbonés crus sont ensuite cuits à une température généralement supérieure à 900°C dans un four, qui est généralement un four à feu tournant (étape CB).

Il est avantageux de stocker la partie restante P2 et la poudre F dans des réserves tampons, telles que des silos, dénotées respectivement ST2 et ST1. Ce stockage tampon permet une plus grande maîtrise du flux des matières carbonées.

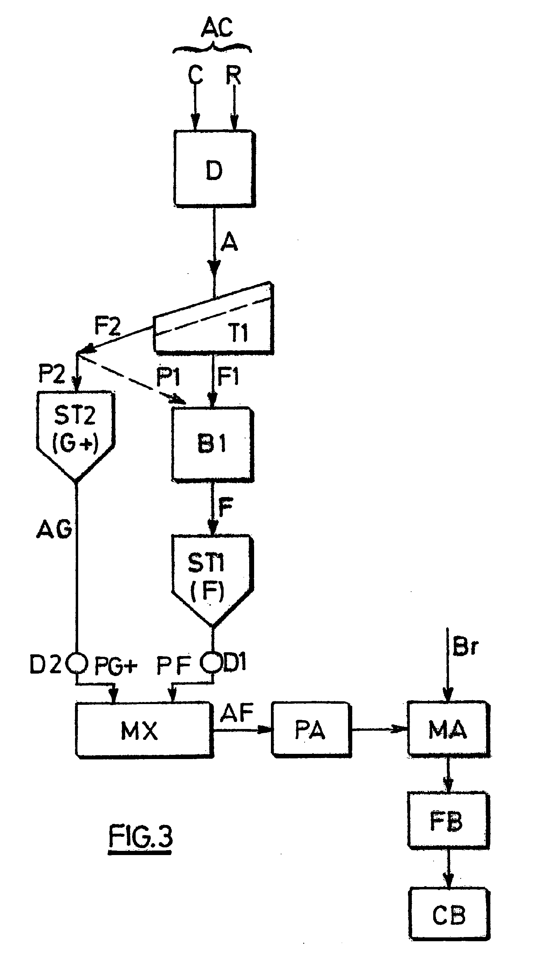

Dans un mode de réalisation préféré de l'invention, illustré à la figure 3, l'agrégat carboné initial AC subit un traitement préalable D visant à éliminer les grains de taille supérieure à une valeur déterminée (ou seuil de tolérance) Y, qui est de préférence égale à 20 mm, et de préférence encore égale à 30 mm. Cette opération permet notamment d'éviter d'endommager certains types de malaxeurs en aval du procédé et/ou de mieux contrôler les écoulements de matière sur les tapis, vis, vibrants ou goulottes servant au transport des matières granuleuses.

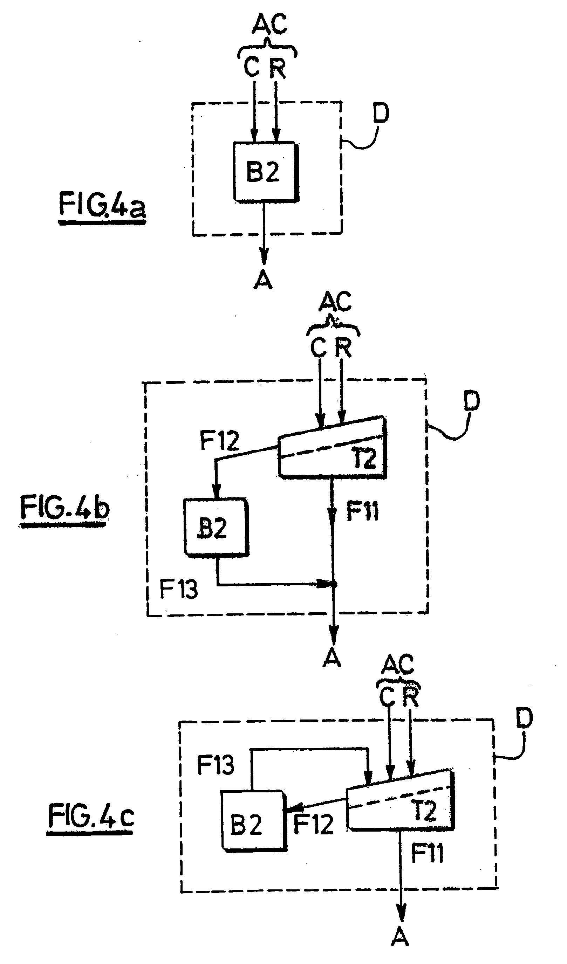

Tel qu'illustré à la figure 4a à 4c, le traitement préalable D comprend de préférence un broyage B2 et, éventuellement, une opération de séparation T2 de l'agrégat carboné initial en une fraction F11 ne comprenant que des grains de taille inférieure au seuil de tolérance Y et en une fraction F12 constituée de grains de taille supérieure ou égale au dit seuil. L'opération de séparation T2, qui porte alors sur les grains de taille supérieure à Y, permet d'augmenter l'efficacité et la productivité du broyage B2. B2 est avantageusement un broyeur fonctionnant par écrasement en couche de matière, tel qu'un broyeur vibrant à cône Rhodax® de la Société FCB, ou un broyeur à rouleau, ce qui permet d'éviter le recours à l'opération de séparation T2 (figure 4a).

Dans la variante illustrée à la figure 4b, l'agrégat carboné A issu de l'étape D, et qui est traité dans la suite du procédé selon l'invention, est constitué de l'agrégat broyé F13 issu du broyage B2 et, éventuellement, aussi de la fraction F11. L'étape préalable D sans opération de séparation T2 (figure 4a) peut être réalisée, par exemple, à l'aide d'un broyeur à compression ou par écrasement en couche de matière en circuit ouvert, qui est apte à broyer efficacement les très gros grains sans produire de quantités importantes de grains sable, fins et ultra-fins, c'est-à-dire sans modifier le rapport des proportions de grains Gr et de grains S de manière rédhibitoire.

Dans la variante illustrée à la figure 4c, l'agrégat F13 issu du broyeur B2 est réintroduit dans le moyen de séparation T2.

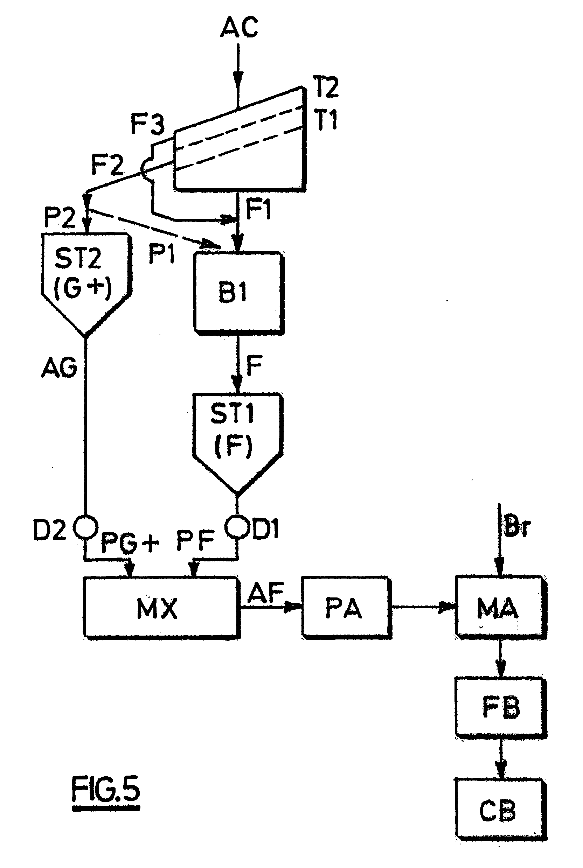

Selon le mode de réalisation de l'invention illustré à la figure 5, le procédé comprend en outre une étape de séparation préalable T2 de l'agrégat carboné initial AC qui permet de retirer les grains de taille supérieure à Y (flux F3) et le mélange de ces grains avec la fraction F1 avant, ou lors, de ladite opération de broyage B1 de la fraction F1. En pratique, un moyen de séparation T2 peut être associé au moyen de séparation T1 de manière à retirer les grains de grande taille de l'agrégat carboné initial et de les introduire dans le broyeur B1. Cette variante présente l'avantage d'éliminer à moindre frais les grains de taille supérieure à Y car un seul moyen de séparation et un seul broyeur sont alors nécessaires.

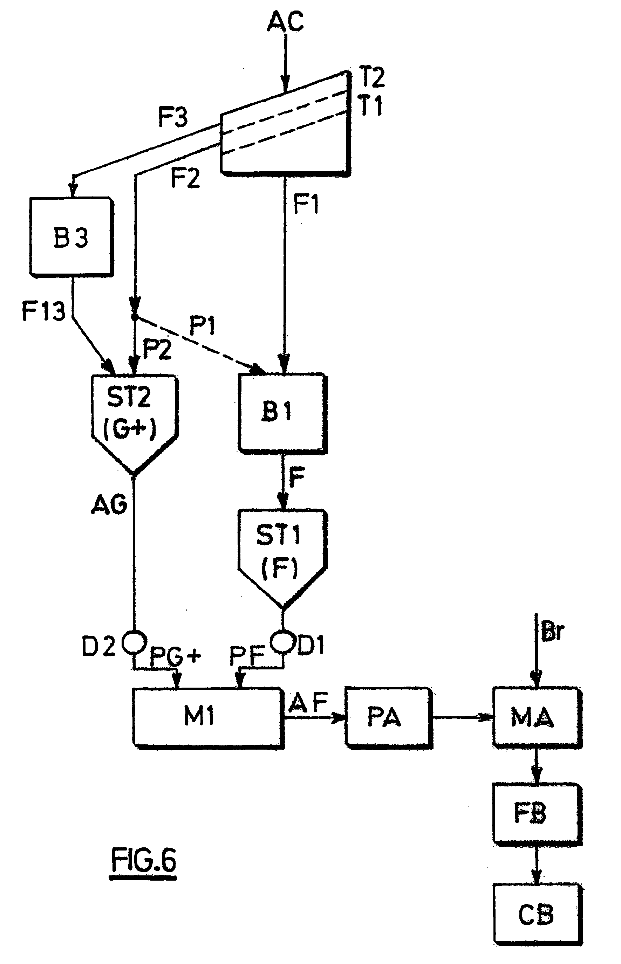

Selon la variante de l'invention illustrée à la figure 6, le procédé comprend en outre une étape de séparation supplémentaire T2 de l'agrégat carboné initial AC qui permet de retirer les grains de taille supérieure à Y (flux F3), leur broyage B3 et le mélange du produit broyé obtenu F13 avec ladite seconde partie P2, de manière à limiter la proportion de ces grains dans la partie P2 de granulométrie G+. Le broyeur B3 est de préférence un broyeur à écrasement en couche de matière. Cette variante présente l'avantage d'utiliser un broyeur de faible capacité car la quantité de grains de taille supérieure à Y reste faible dans AC. Cette variante présente aussi l'avantage de permettre le regroupement des deux moyens de séparation T1 et T2.

Le procédé de l'invention est notamment destiné à la fabrication d'anodes en carbone utilisées pour la production d'aluminium basé sur le procédé Hall-Héroult, ce qui permet de simplifier le procédé complet et de réduire les coûts de fabrication.

Les anodes en carbone obtenues par le procédé selon l'invention peuvent être avantageusement utilisées dans un procédé de production d'aluminium primaire basé sur le procédé d'électrolyse Hall-Héroult, grâce à la haute résistance au choc thermique de celles-ci.

### Exemples

Des essais ont été effectués à l'aide du procédé de l'invention, selon le mode de réalisation illustré aux figures 3 et 4a. Le broyeur B2 était un broyeur de marque Rhodax®.

L'agrégat de carbone était constitué par un mélange tout venant de coke à 70 % et de recyclés à 30 %. Les recyclés provenaient d'anodes de cuve d'électrolyse usées. La granulométrie moyenne de l'agrégat de carbone et de ses constituants, obtenue sur une période d'une semaine de production d'anodes d'électrolyse de l'aluminium (correspondant à la fabrication de 3000 anodes environ), est donnée au tableau 1.

La granulométrie de l'agrégat pré-broyé A issu de l'étape de traitement préalable D figure également au tableau 1. Elle montre que cette étape a permis d'éliminer efficacement les grains de taille supérieure à 30 mm.

**Tableau 1**

| | < 30 µm | 30 µm à 300 µm | 300 µm à 30 mm | > 30 mm | Gr/S |
|---|---|---|---|---|---|
| Coke C | 0,1 | 12,3 | 87,6 | 0,0 | 7,1 |
| Recyclés R | 0,0 | 7,0 | 91,0 | 2,0 | 13,3 |
| Agrégat carboné initial AC | 0,1 | 10,8 | 88,5 | 0,6 | 8,3 |
| Agrégat pré-broyé A | 0,1 | 12,0 | 87,9 | 0,0 | 7,3 |

L'agrégat pré-broyé A a ensuite été séparé en deux fractions F1 et F2, à l'aide d'un tamis équipé de toiles à mailles carrées. Le seuil de tri X entre ces deux fractions était de 1 mm. En moyenne, 88 % de l'agrégat pré-broyé A passait du côté de F2 et 12 % passait du côté de F1. P1 était égal à 5 %, de sorte que la fraction F1 et 5 % de la partie F2 étaient ensuite entièrement broyées dans B1, qui était un broyeur à boulets, de manière à obtenir une poudre de fines F. Un agrégat a ensuite été reconstitué en mélangeant la partie P2 (de granulométrie G+) et les fines F dans les proportions suivantes : PG+ = 84 % de P2 (correspondant à 88 % de A moins les 5 % de F2 dérivés vers le broyeur B1) et PF = 16 % de F (correspondant à 12 % de A plus les 5 % de F2). La granulométrie des fractions F2 et F1, des fines F et de l'agrégat reconstitué au niveau de M1 est donnée au tableau 2.

L'agrégat carboné AC entrant dans la tour à pâte, c'est-à-dire en amont du procédé, avait donc un Gr/S nettement inférieur au Gr/S de l'agrégat reconstitué (à savoir 8,3 par rapport à 21,4). L'étape de traitement préalable D (pré-broyage) a permis de supprimer les gros grains en ne diminuant que très légèrement le Gr/S (à savoir 8,3 à l'entrée du broyeur et 7,3 après le pré-broyage).

L'agrégat carboné reconstitué a été mélangé à un brai de pétrole, puis malaxé à chaud à l'aide d'un malaxeur de manière à former une pâte homogène. Cette pâte était ensuite mise en forme de façon à constituer des anodes carbonées crues qui étaient ensuite cuites dans un four à feu tournant. La densité géométrique moyenne, après cuisson, des anodes obtenues selon le procédé de l'invention était de 1,580 avec un écart type de 0,015.

**Tableau 2**

| | < 30 µm | 30 µm à 300 µm | 300 µm à 30 mm | > 30 mm | Gr/S |
|---|---|---|---|---|---|
| Fraction F2 (granulométrie G+) | 0,1 | 1,6 | 98,3 | 0,0 | 64,3 |
| Fraction F1 (granulométrie G-) | 0,1 | 88,9 | 11,0 | 0,0 | 0,1 |
| Fines F | 85,0 | 15,0 | 0,0 | 0,0 | 0,0 |
| Reconstitué | 14,5 | 3,8 | 81,7 | 0,0 | 21,4 |

Les anodes obtenues ont été utilisées dans des cuves d'électrolyse pour la production d'aluminium selon le procédé Hall-Héroult. Aucune des anodes produites ne s'est fracturée par choc thermique dans les cuves d'électrolyse où elles ont été utilisées.

### Avantages de l'invention

La simplicité du procédé permet de limiter les coûts d'investissement et d'entretiens, ainsi que les risques de pannes, grâce au nombre réduit d'équipements électromécaniques et mécaniques requis. En particulier, le nombre réduit de doseurs permet de limiter sensiblement les risques de panne.

## Revendications

1. Procédé de fabrication de blocs carbonés, et notamment d'anodes, comprenant l'approvisionnement d'un agrégat carboné initial AC, une opération d'ajustement de la granulométrie dudit agrégat carboné AC de manière à obtenir un agrégat carboné final AF de granulométrie déterminée Gf, un malaxage à chaud MA de l'agrégat carboné avec une quantité déterminée de liant à base de brai Br pour former une pâte homogène, une étape FB de formation d'au moins un bloc carboné cru à partir de ladite pâte, et une étape CB de cuisson du ou des blocs carbonés crus, et **caractérisé en ce que** ledit ajustement comprend :
a- la séparation dudit agrégat carboné initial AC en une première fraction F1, de granulométrie G-, constituée de grains dont la taille est inférieure à X et en une seconde fraction F2, de granulométrie G+, constituée de grains dont la taille est supérieure ou égale à X, X étant compris entre 0,2 et 2 mm ;
b- le broyage B1 de la première fraction F1 et d'une partie P1 de la seconde fraction F2, dite "partie dérivée P1 ", de manière à obtenir une poudre F comprenant une proportion PUF contrôlée de grains ultra-fins, dits UF, c'est-à-dire de grains de taille inférieure à 30 µm ;
c- le mélange MX de la partie restante P2 de la fraction F2 et de la dite poudre F dans des proportions qui permettent d'obtenir des blocs carbonés dont la granulométrie Gf à l'état cru est telle que le rapport dit "Gr/S" entre la proportion PGr de grains de taille supérieure à 0,3 mm et la proportion PS de grains de taille comprise entre 30 µm et 0,3 mm est au moins égal à 4 et dont la densité après cuisson est supérieure à 1,55.

2. Procédé selon la revendication 1, **caractérisé en ce que** X est compris entre 0,3 et 1 mm.

3. Procédé selon la revendication 1 ou 2, **caractérisé en ce que** ledit agrégat carboné initial est un agrégat tout venant.

4. Procédé selon l'une quelconque des revendications 1 à 3, **caractérisé en ce que** les parties P1 et P2 sont régulées de manière à maintenir sensiblement constant le débit DF de poudre F sortant du broyage B1.

5. Procédé selon l'une quelconque des revendications 1 à 4, **caractérisé en ce que** l'agrégat initial AC comprend du coke de pétrole calciné dont le taux TS de grains de taille inférieure à 0,3 mm est au plus égal à 35 %.

6. Procédé selon la revendication 5, **caractérisé en ce que** le taux TS est inférieur ou égal à 10 %.

7. Procédé selon l'une quelconque des revendications 1 à 6, **caractérisé en ce que** ledit agrégat initial AC comprend jusqu'à 40 % de produits carbonés recyclés.

8. Procédé selon l'une quelconque des revendications 1 à 7, **caractérisé en ce que** l'étape de broyage B1 est effectuée à l'aide d'un broyeur à boulets, muni éventuellement un circuit de re-circulation comprenant un sélecteur dynamique ventilé permettant d'ajuster la granulométrie et la fraction PUF.

9. Procédé selon l'une quelconque des revendications 1 à 8, **caractérisé en ce que** la partie P1 est inférieure à 20 %.

10. Procédé selon l'une quelconque des revendications 1 à 9, **caractérisé en ce que** ladite proportion PUF est supérieure à 70 %.

11. Procédé selon l'une quelconque des revendications 1 à 9, **caractérisé en ce que** le rapport Gr/S est supérieur à 10.

12. Procédé selon l'une quelconque des revendications 1 à 11, **caractérisé en ce qu'**il comprend en outre une opération de traitement préalable de l'agrégat initial AC qui permet d'éliminer les grains de taille supérieure à une valeur déterminée Y.

13. Procédé selon la revendication 12, **caractérisé en ce que** ledit traitement préalable comprend un broyage B2 fonctionnant par écrasement en couche de matière, tel qu'un broyeur vibrant à cône.

14. Procédé selon la revendication 13, **caractérisé en ce que** ledit traitement préalable comprend en outre une opération de séparation T2 de l'agrégat carboné initial AC qui permet de retirer les grains de taille supérieure à une valeur déterminée Y et **en ce que** ledit broyage B2 porte sur ces grains.

15. Procédé selon la revendication 12, **caractérisé en ce que** l'opération de traitement préalable comprend une étape de séparation T2 de l'agrégat carboné initial AC qui permet de retirer les grains de taillé supérieure à une valeur déterminée Y et le mélange de ces grains avec la fraction F1 avant, ou lors, de ladite opération de broyage B1 de la traction F1.

16. Procédé selon la revendication 12, **caractérisé en ce que** l'opération de traitement préalable comprend une étape de séparation T2 de l'agrégat carboné initial AC qui permet de retirer les grains de taille supérieure à une valeur déterminée Y, un broyage B3 de ces très gros grains et le mélange du produit broyé obtenu F13 avec ladite seconde partie P2.

17. Procédé selon l'une quelconque des revendications 12 à 16, **caractérisé en ce que** ladite valeur déterminée Y est égale à 20 mm.

18. Utilisation du procédé selon l'une quelconque des revendications 1 à 17 pour la fabrication d'anodes en carbone destinées à la fabrication d'aluminium basée sur le procédé Hall Héroult.

## Claims

1. Process for producing carbon blocks, in particular anodes, comprising the supply of an initial carbon aggregate AC, a grain size distribution adjustment operation of said carbon aggregate AC such as to obtain a final carbon aggregate AF of determined grain size distribution Gf, hot mixing MA of the carbon aggregate with a determined quantity of pitch binder Br to form a homogeneous paste, a forming step FB to form at least one crude carbon block from said paste, and a baking step CB of the crude carbon block(s), and
**characterized in that** said adjustment comprises:
a) separating said initial carbon aggregate AC into a first fraction F1, of grain size distribution G-made up of grains whose size is smaller than X, and into a second fraction F2, of grain size distribution G+, made up of grains whose size is greater than or equal to X, X lying between 0.2 and 2 mm;
b) crushing B1 the first fraction F1 and part P1 of the second fraction F2, so-called "diverted part P1" in order to obtain a powder F containing a controlled proportion PUF of ultra-fine grains, called UF, that is to say grains smaller in size than 30 µm;
c) mixing MX the remaining part P2 of fraction F2 and said powder F in proportions allowing carbon blocks to be obtained whose grain size distribution Gf in the crude state is such that the so-called "Gr/S" ratio between the proportion PGr of grains larger than 0.3 mm and the proportion PS of grains between 30 µm and 0.3 mm in size is at least equal to 4, and whose density after baking is greater than 1.55.

2. Process according to claim 1, **characterized in that** X lies between 0.3 and 1 mm.

3. Process according to claim 1 or 2,
**characterized in that** said initial carbon aggregate is ungraded aggregate.

4. Process according to any of claims 1 to 3, **characterized in that** parts P1 and P2 are adjusted so as to maintain a substantially constant flow DF of powder F leaving the crushing operation B1.

5. Process according to any of claims 1 to 4, **characterized in that** the initial aggregate AC contains calcined petroleum coke whose percentage TS of grains smaller than 0.3 mm is no more than 35 %.

6. Process according to claim 5, **characterized in that** the TS percentage is 10 % or less.

7. Process according to any of claims 1 to 6, **characterized in that** said initial aggregate AC contains up to 40 % of recycled carbon products.

8. Process according to any of claims 1 to 7, **characterized in that** the crushing step B1 is conducted by means of a ball crusher optionally fitted with a re-circulation circuit comprising an air swept dynamic separator enabling adjustment of grain size distribution and of the PUF fraction.

9. Process according to any of claims 1 to 8, **characterized in that** the part P1 is less than 20 %.

10. Process according to any of claims 1 to 9, **characterized in that** said PUF proportion is greater than 70 %.

11. Process according to any of claims 1 to 9, **characterized in that** the ratio Gr/S is greater than 10.

12. Process according to any of claims 1 to 11, **characterized in that** it also comprises a prior treatment operation of the initial aggregate AC which enables removal of grains greater in size than a determined value Y.

13. Process according to claim 12, **characterized in that** said prior treatment comprises a crushing operation B2 by material bed grinding under pressure, for example using a cone vibrating crusher.

14. Process according to claim 13, **characterized in that** said prior treatment also comprises a separating operation T2 of the initial carbon aggregate AC with which it is possible to remove grains greater in size than a determined value Y, and **in that** said crushing B2 concerns these grains.

15. Process according to claim 12, **characterized in that** the prior treatment operation comprises a separating step T2 of the initial carbon aggregate AC with which it is possible to remove the grains greater in size than a determined value Y, and mixing of these grains with fraction F1 before or during said crushing operation B1 of fraction F1.

16. Process according to claim 12, **characterized in that** the prior treatment operation comprises a separating step T2 of the initial carbon aggregate AC with which it is possible to remove the grains greater in size than a determined value Y, crushing B3 of these very large grains, and mixing the crushed product obtained F13 with said second part P2.

17. Process according to any of claims 12 to 16, **characterized in that** said determined value Y is 20 mm.

18. Use of a process according to any of claims 1 to 17 for the production of carbon anodes intended for the production of aluminium based on the Hall-Héroult process.

## Patentansprüche

1. Verfahren zur Herstellung von Kohlenstoffblöcken und insbesondere Anoden, umfassend das Bereitstellen eines kohlenstoffhaltigen Ausgangsaggregats AC, einen Vorgang zur Einstellung der Korngröße des kohlenstoffhaltigen Ausgangsaggregats AC, um ein kohlenstoffhaltiges Endaggregat AF mit bestimmter Korngröße Gf zu erhalten, ein Warmvermischen MA des kohlenstoffhaltigen Aggregats mit einer festgelegten Menge Bindemittel auf Basis von Pech Br, um eine homogene Masse zu bilden, einen Schritt FB zur Bildung mindestens eines Kohlenstoffrohblocks aus dieser Masse und einen Schritt CB zum Brennen des bzw. der Kohlenstoffrohblöcke, und **dadurch gekennzeichnet, dass** die genannte Einstellung umfasst:
a- das Auftrennen des kohlenstoffhaltigen Ausgangsaggregats AC in eine erste Fraktion F1 mit der Körnung G-, bestehend aus Körnern, deren Korngröße kleiner als X ist, und in eine zweite Fraktion F2 mit der Körnung G+, bestehend aus Körnern, deren Korngröße größer oder gleich X ist, wobei X im Bereich zwischen 0,2 und 2 mm liegt;
b- das Mahlen B1 der ersten Fraktion F1 und eines Teils P1 der zweiten Fraktion F2, des sog. "abgezweigten Teils P1", um ein Pulver F zu erhalten, das einen kontrollierten Anteil PUF an ultrafeinen Körnern "UF", d.h. Körnern mit einer Korngröße unter 30 µm, enthält;
c- das Mischen MX des restlichen Teils P2 der Fraktion F2 und des Pulvers F in Anteilen, die es gestatten, Kohlenstoffblöcke zu erhalten, deren Körnung Gf im Rohzustand so beschaffen ist, dass das sog. "Gr/S-Verhältnis" zwischen dem Anteil PGr an Körnern über 0,3 mm Größe und dem Anteil PS an Körnern zwischen 30 µm und 0,3 mm Größe mindestens 4 beträgt, und deren Dichte nach erfolgtem Brennen höher als 1,55 ist.

2. Verfahren nach Anspruch 1, **dadurch gekennzeichnet, dass** X im Bereich zwischen 0,3 und 1 mm liegt.

3. Verfahren nach Anspruch 1 oder 2, **dadurch gekennzeichnet, dass** das kohlenstoffhaltige Ausgangsaggregat ein ungesiebtes Aggregat ist.

4. Verfahren nach irgendeinem der Ansprüche 1 bis 3, **dadurch gekennzeichnet, dass** die Teile P1 und P2 so eingestellt werden, dass der Durchsatz DF an Pulver F aus dem Mahlschritt B1 1 im Wesentlichen konstant gehalten wird.

5. Verfahren nach irgendeinem der Ansprüche 1 bis 4, **dadurch gekennzeichnet, dass** das Ausgangsaggregat AC kalzinierten Petrolkoks enthält, dessen Anteil TS an Körnern über 0,3 mm Größe höchstens 35 % beträgt.

6. Verfahren nach Anspruch 5, **dadurch gekennzeichnet, dass** der Anteil TS kleiner oder gleich 10 % ist.

7. Verfahren nach irgendeinem der Ansprüche 1 bis 6, **dadurch gekennzeichnet, dass** das Ausgangsaggregat AC bis zu 40 % rückgewonnene Kohlenstoffprodukte enthält.

8. Verfahren nach irgendeinem der Ansprüche 1 bis 7, **dadurch gekennzeichnet, dass** der Mahlschritt B1 mit einer Kugelmühle durchgeführt wird, welche eventuell mit einem Rezirkulationskreis mit belüftetem, dynamischen Wahlschalter zur Einstellung der Körnung und der Fraktion PUF ausgestattet ist.

9. Verfahren nach irgendeinem der Ansprüche 1 bis 8, **dadurch gekennzeichnet, dass** der Teil P1 weniger als 20 % beträgt.

10. Verfahren nach irgendeinem der Ansprüche 1 bis 9, **dadurch gekennzeichnet, dass** der Anteil PUF weniger als 70 % beträgt.

11. Verfahren nach irgendeinem der Ansprüche 1 bis 9, **dadurch gekennzeichnet, dass** das Gr/S-Verhältnis größer als 10 ist.

12. Verfahren nach irgendeinem der Ansprüche 1 bis 11, **dadurch gekennzeichnet, dass** es zusätzlich eine Vorbehandlung des Ausgangsaggregats AC umfasst, die es ermöglicht, die Körner mit einer Korngröße oberhalb eines festgelegten Wertes Y zu eliminieren.

13. Verfahren nach Anspruch 12, **dadurch gekennzeichnet, dass** die Vorbehandlung ein Mahlen B2 durch Zerdrücken einer Materialschicht umfasst, wie bei einer Kegel-Schwingmühle.

14. Verfahren nach Anspruch 13, **dadurch gekennzeichnet, dass** die Vorbehandlung zusätzlich einen Trennschritt T2 für das kohlenstoffhaltige Ausgangsaggregat AC umfasst, der das Entfernen der Körner mit einer Korngröße oberhalb eines festgelegten Wertes Y ermöglicht, und dass das Mahlen B2 diese Körner betrifft.

15. Verfahren nach Anspruch 12, **dadurch gekennzeichnet, dass** die Vorbehandlung zusätzlich einen Trennschritt T2 für das kohlenstoffhaltige Ausgangsaggregat AC umfasst, der das Entfernen der Körner mit einer Korngröße oberhalb eines festgelegten Wertes Y und die Mischung dieser Körner mit der Fraktion F1 vor oder während des Mahlens B1 der Fraktion F1 ermöglicht.

16. Verfahren nach Anspruch 12, **dadurch gekennzeichnet, dass** die Vorbehandlung zusätzlich einen Trennschritt T2 für das kohlenstoffhaltige Ausgangsaggregat AC umfasst, der das Entfernen der Körner mit einer Korngröße oberhalb eines festgelegten Wertes Y, ein Mahlen B3 dieser sehr groben Körner und das Mischen des erhaltenen Mahlproduktes F13 mit dem zweiten Teil P2 ermöglicht.

17. Verfahren nach irgendeinem der Ansprüche 12 bis 16, **dadurch gekennzeichnet, dass** der festgelegte Wert Y 20 mm beträgt.

18. Verwendung des Verfahrens nach irgendeinem der Ansprüche 1 bis 17 für die Herstellung von Kohlenstoffanoden zur Aluminiumherstellung nach dem Hall-Héroult-Verfahren.
